# EUROPÄISCHE PATENTSCHRIFT

(11) **EP 1 230 645 B1**
(45) Veröffentlichungstag und Bekanntmachung des Hinweises auf die Patenterteilung: **13.12.2006**
(21) Anmeldenummer: 00984862.3
(22) Anmeldetag: 24.10.2000
(51) Int. Cl.: G21C 19/307

(54) **VERFAHREN UND VORRICHTUNG ZUM REDUZIEREN VON KATIONISCHEN VERUNREINIGUNGEN UND ZUM DOSIEREN VON LITHIUM IM KÜHLWASSER EINES LEICHTWASSERREAKTORS UND KÜHLWASSERSYSTEM EINES LEICHTWASSERREAKTORS MIT EINER SOLCHEN VORRICHTUNG**
METHOD AND DEVICE FOR REDUCING CATIONIC IMPURITIES AND FOR DOSING LITHIUM IN THE COOLING WATER OF A LIGHT-WATER REACTOR AND A COOLING WATER SYSTEM OF A LIGHT-WATER REACTOR HAVING SUCH A DEVICE
PROCEDE ET DISPOSITIF POUR REDUIRE LES IMPURETES CATIONIQUES ET DOSER LE LITHIUM DANS L'EAU DE REFROIDISSEMENT D'UN REACTEUR A EAU LEGERE, ET SYSTEME A EAU DE REFROIDISSEMENT D'UN REACTEUR A EAU LEGERE POURVU D'UN TEL DISPOSITIF

(30) Priorität: 26.10.1999 DE 19951642
(43) Veröffentlichungstag der Anmeldung: 14.08.2002
(73) Patentinhaber: Framatome ANP GmbH, 91058 Erlangen (DE); EnBW Kraftwerke AG, 70173 Stuttgart (DE)
(72) Erfinder: MEINTKER, Manfred, 91096 Möhrendorf (DE); BOLZ, Michael, 76689 Karlsdorf (DE); ENKLER, Günther, 68753 Waghäusel (DE); RÜHLE, Wilfried, 69214 Eppelheim (DE)
(74) Vertreter: Tergau & Pohl Patentanwälte
(86) Internationale Anmeldenummer: PCT/DE2000/003763
(87) Internationale Veröffentlichungsnummer: WO 2001/031658

(56) Entgegenhaltungen:
- EP-A- 0 911 834
- EP-A- 0 911 835
- US-A- 4 148 708

## Beschreibung

Die Erfindung bezieht sich auf ein Verfahren zum Reduzieren von kationischen Verunreinigungen im Kühlwasserkreislauf eines Leichtwasserreaktors sowie auf die Anwendung des Verfahrens, wobei der Kühlwasserkreislauf eine Kationen-Lösung enthält. Außerdem bezieht sich die Erfindung auf ein Verfahren und die Anwendung des Verfahrens zum Dosieren von Lithium in einem kationische Verunreinigungen enthaltenden Kühlwasserkreislauf eines Leichtwasserreaktors. Außerdem bezieht sich die Erfindung auf eine Vorrichtung mit einer Elektrodialyseeinheit, die auf einer Seite an einem Wasserkreislauf und auf der anderen Seite an einen Konzentratkreislauf angeschlossen ist. Schließlich betrifft die Erfindung ein Kühlwassersystem eines Leichtwasserreaktors.

Bei Kernkraftwerken mit einem Leichtwasserreaktor wird dem Reaktorkühlmittel (Wasser) zum Zweck der Absorption von Neutronen Bor in Form von Borsäure (H₃BO₃) zugesetzt. Dies dient zum Strahlenschutz der Reaktorkomponenten und wird sowohl bei Siedewasserreaktoren als insbesondere auch bei Druckwasserreaktoren praktiziert. Die Borsäure hat die Nebenwirkung, daß sie den pH-Wert des Kühlwassers absenkt, was für den Korrosionsschutz der Komponenten unerwünscht ist und durch die Zugabe eines Alkalisierungsmittels zumindest teilweise kompensiert werden muß. Üblicherweise wird als Alkalisierungsmittel isotopenreines Lithium-7 (⁷Li) verwendet, da dieses einerseits nahezu keine unerwünschten Kernreaktionen mit den im Reaktorkern vorhandenen Neutronen aufweist und andererseits durch die bei der Neutronenabsorption durch das wirksame Borisotop ¹⁰B ablaufende Kernreaktion ¹⁰B(n,α)⁷Li ständig im Reaktor selber gebildet wird.

Die Isotopenreinheit des verwendeten Lithiums ist erforderlich, weil das andere in der natürlichen Zusammensetzung des Lithiums vorhandene Isotop, ⁶Li, eine sehr starke Reaktion mit den Neutronen aufweist, welche als Folgeprodukt Tritium erzeugt. Die übermässige Anreicherung von Tritium im Kühlwasser ist unerwünscht. Das ⁷Li wird in Form von Lithiumhydroxyid-Lösung (LiOH) zugegeben und liegt infolge der Dissoziation von LioH als einwertiges Kation ⁷Li⁺ vor. Die Herstellung von isotopenreinem ⁷Li ist aufwendig. Isotopenreines ⁷Li ist deshalb sehr wertvoll und ein sparsamer Umgang damit ist wünschenswert.

Die ständige Neubildung von ⁷Li infolge der Kernreaktion des ¹⁰B einerseits und die nur geringen Verluste durch Kühlwasserleckagen bewirken im Laufe eines Brennstoffzyklus eines Leichtwasserreaktors eine Zunahme der ⁷Li-Konzentration im Kühlwasser. Dies betrifft insbesondere Kühlwasser des Primärkreislaufs eines Leichtwasserreaktors, insbesondere Kühlwaser des Primärkreislaufs eines Druckwasserreaktors. Die ⁷Li-Konzentration im Kühlwasser nimmt insbesondere zu Beginn, d.h. in einem frühen Zeitbereich eines Brennstoffzyklus zu. Da Lithium bei Überschreiten einer Konzentration von etwa 2ppm eine Korrosion an Reaktorbauteilen verursachen kann, ist es erforderlich eine hinreichende Menge an ⁷Li⁺ dem Kühlwasser wieder zu entziehen. Dadurch wird vor allem eine Korrosion von Brennstabhüllrohren, welche den Kernbrennstoff im Brennstab einschließen, reduziert.

Da aber außerdem die Dichte von spaltbarem Material im Brennstoff im Verlaufe eines Brennstoffzyklus abnimmt, ist es erforderlich auch die Konzentration von neutronenabsorbierendem Bor im Verlaufe eines Brennstoffzyklus im Kühlwasser zu reduzieren. Dies wird überlicherweise durch eine Entnahme.von borhaltigem Kühlwasser aus dem Kühlwasserkreislauf und dem Einspeisen einer gleich großen Menge borfreien Wassers erreicht. Bei diesem Vorgang wird mit dem borhaltigen Kühlwasser auch Lithium aus dem Kreislauf entfernt, welches durch die Einspeisung des üblicherweise vollentsalzten Wassers nicht ergänzt wird. Im Resultat wird daher durch die Borkonzentrationsabsenkung auch die Lithiumkonzentration abgesenkt. Zum Ende eines Brennstoffzyklus werden die Kühlwasseraustauschmassen erheblich vergrößert, um eine ausreichende Absenkung der Borkenzentration zu erreichen. Üblicherweise wird dann zur Aufrechterhaltung einer notwendigen Lithiumkonzentration LiOH-Lösung in den Kühlwasserkreislauf eingespeist, insbesondere in den Primärkreislauf eines Druckwasserreaktors.

Es muß also abhängig vom Betriebszyklus eines Leichtwasserreaktors der Gehalt von Lithium im Kühlwasser des Leichtwasserreaktors dosiert werden. Diese Dosierung führt insbesondere vor allem zu frühen Zeiten eines Brennstoffzyklus Lithium dem Kühlwasser zu und insbesondere zu späteren Zeiten eines Brennstoffzyklus aus dem Kühlwasser ab.

Da durch die Kernspaltung im Reaktor und durch die Aktivierung von Material infolge der Neutronenstrahlung ständig radioaktive Stoffe entstehen, ist es unvermeidbar, daß diese zum Teil in das Kühlwasser gelangen und dieses verunreinigen. Diese Stoffe können im Kühlwasser in unterschiedlicher chemischer Form und teilweise ungelöst und teilweise gelöst als Anionen oder Kationen vorliegen. Insbesondere betrifft dies strahlende Nuklide, vor allem Cäsium und Kobalt, welche als Kationen vorliegen. Da die Abtrennung von Lithium aus dem Kühlwasser üblicherweise unter Ausnutzung der positiven elektrischen Ladung des Lithiumkations erfolgt, wird auch ein Teil der kationischen, radioaktiven Verunreinigungen gemeinsam mit dem Lithium vom Kühlwasser abgetrennt. Das wertvolle, isotoprenreine, abgetrennte Lithium ist damit verunreinigt kann deshalb in der Regel nicht mehr wiederverwendet werden.

Beispielsweise wird üblicherweise zur Absenkung der Lithiumkonzentration das Kühlwasser über Ionentauscher geleitet, welche Kationentauscherharze umfassen. Diese Kationentauscherharze binden die im durchströmenden Wasser enthaltenen Lithiumionen nahezu vollständig an das Harz und geben gleichzeitig eine äquivalente Menge an Wasserstoffionen an das Wasser ab. Sie binden aber auch die kationischen Verunreinigungen, konzentrieren also strahlende Nuklide. Sind sie gesättigt und schließlich für den Lithiumentzug wirkungslos, sowerden sie durch neue Harze ersetzt. Eine Regenerierung der Austauscherharze, bei der das kostbare ⁷Li rückgewonnen und bei Bedarf wieder in den Kühlwasserkreislauf eingespeist werden könnte, scheitert schon daran, daß dabei auch die konzentrierten Verunreinigungen zusammen mit dem ⁷Li freigesetzt werden. Die erschöpften Austauscherharze sind daher als hochstrahlender Sondermüll zu entsorgen.

Die Erfindung geht davon aus, daß die Ionenkonzentrationen in zwei Lösungen eingestellt werden können, wenn eine Elektrodialyse zwischen den Kreisläufen der beiden Lösungen vorgenommen wird. Unter Elektrodialyse ist dabei ein Ionentransport durch eine Membrananordnung mit mindestens einer die Kreisläufe trennenden Membran verstanden, wobei Richtung und Durchsatz des Ionentransports durch Anlegen einer elektrischen Spannung steuerbar ist. Beispiele für solche Elektrodialyseverfahren sind z.B. in den Europäischen Patentanmeldungen 19747077.7 und 19747076.9 beschrieben. Insbesondere das in der erstgenannten Patentanmeldung beschriebene Verfahren hat jedoch den Nachteil, daß gleichzeitig mit einer Senkung der Lithiumkonzentration eine Absenkung der Borkonzentration erfolgt.

Aus der US 4,1438,708 sind ein Verfahren und eine Vorrichtung gemäß dem Oberbegriff der unabhängigen Ansprüche 1,2 bzw. dem unabhängigen Anspruch 17 bekannt. Der dort vorgesehene Ionentauscher ist jedoch in seinem Wirkungsgrad nur begrenzt.

Es ist Aufgabe der Erfindung, Verfahren und Vorrichtungen zu verbessern, die mit einer derartigen Elektrodialyse arbeiten.

Zur Lösung der Aufgabe geht die Erfindung entsprechend diesem Stand der Technik von einem Verfahren zum Dosieren von Lithium in einem kationischen Verunreinigungen enthaltenden Kühlwasser in einem Kühlwasserkreislauf eines Leichtwasserreaktors aus. Dabei wird das Kühlwasser durch eine erste Seite einer Elektrodialyseeinheit geführt, und durch die zweite Seite der Elektrodialyseeinheit wird ein Medium in einem Konzentratkreislauf geführt. Dabei wird durch das Anlegen einer elektrischen Spannung an die Elektrodialyseeinheit der Austausch von Lithium-Kationen zwischen dem Kühlwasser im Kühlwasserkreislauf und dem Medium im Konzentratkreislauf gesteuert.

Erfindungsgemäß wird die Aufgabe bei dem genannten Verfahren dadurch gelöst, daß in dem Medium im Konzentratkreislauf eine erhöhte Kationenkonzentration eingestellt wird, bevor die kationischen Verunreinigungen mittels eines selektiven Ionentauschers herausgefiltert werden. Dazu ist insbesondere ein Kationentauscher geeignet. Dieser selektive Ionenaustauscher ist im Konzentratkreislauf angeordnet; die Reinigung findet also in einem selektiven Ionentauscher statt, der nicht vom Kühlwasser durchströmt wird, sondern von dem Medium mit den konzentrierten Kationen.

Die Erfindung geht dabei von der überraschenden Erkenntnis aus, daß der Dekontaminations-Faktor eines selektiven Ionenaustauschers von der Konzentration der über den Ionenaustauscher geleiteten Lösung abhängt. Der Dekontaminations-Faktor gibt das Verhältnis der Aktivität vor dem Ionentauscher zur Aktivität nach dem Ionentauscher an. In einer Lösung niedriger Ionenkonzentration ist er wesentlich niedriger als bei einer höheren Konzentration. Außerdem kann er vom pH-Wert und Leitfähigkeit der Lösung abhängen. Deshalb ist eine für Kationen selektive austauschende Membrananordnung oder ein selektiver Ionenaustauscher als Membran der Elektrodialyseeinheit, mit der z.B. die Li-Konzentrationen in zwei Kreisläufen eingestellt wird nur bedingt wirksam. Die Selektivität eines Ionentauschers kann aber wesentlich besser genutzt werden, wenn er nur als Filter für die zu selektierenden Ionen in den richtigen Kreislauf eingesetzt wird.

Bei der Verwendung einer Elektrodialyseeinheit zum Dosieren von Lithium in einem kationische Verunreinigungen enthaltenden Kühlwasser wird vorzugsweise ein als Dialysemembran verwendeter Kationenaustauscher verwendet. Er braucht nicht oder nur in großen Abständen ersetzt zu werden. Vielmehr erschöpft sich nur der im Konzentratkreislauf angeordnete Ionentauscher, wobei dann eine erheblich größere Menge an kationischen Verunreinigungen gegen H⁺-Ionen ausgetauscht sind, als in dem Fall, daß der Austauscher im Wasserkreislauf mit der niedrigeren Konzentration angeordnet wäre. Daher genügen bereits verhältnismäßig geringe Mengen des selektiven Ionentauschers, um im genannten System (also im Wasserkreislauf und im Konzentratkreislauf) die Konzentration der kationischen Verunreinigungen wirksam herabzusetzen. Außerdem ist in dem erschöpften Austauscher das Verhältnis der Verunreinigungen zu den Kationen, die für den Wasserkreislauf benötigt werden, stark zugunsten der Verunreinigungen verschoben. Dadurch ergeben sich also z.B. im Reaktor nur geringe Verluste an ⁷Li und geringe Mengen an entsorgungsbedürftigen Ionenaustauscher.

Nach einer Weiterbildung der Erfindung wird das im Konzentratkreislauf geführte Medium gespeichert und bei Bedarf dem Kühlwasser zugeführt. Dies hat den Vorteil, daß zu einem späteren Zeitpunkt des Brennstoffzyklus kein zusätzliches neu anzuschaltendes isotopenreines Lithium dem Kühlwasser zugesetzt werden muß. Denn nach dem genannten Verfahren kann das zu einem frühen Zeitpunkt entzogene isotopenreine Lithium später wieder im Kühlwasserkreislauf verwendet werden, da es effektiv von Verunreinigungen befreit ist.

Vorzugsweise wird dazu das Medium im Konzentratkreislauf durch einen Teilkreislauf mit einem Speicher zum Konzentrieren der Kationen und durch einen ebenfalls an den Speicher angeschlossenen weiteren Teilkreislauf mit dem selektiven Ionentauscher zum Ausfiltern der kationischen Verunreinigungen geführt.

Bevorzugt werden die beiden Seiten der Elektrodialyseeinheit (also der Kühlwasserkreislauf und der Konzentratkreislauf) durch eine Membrananordnung getrennt, die praktisch für Kationen durchlässig ist, aber den Durchtritt von Anionen weitgehend verhindert (Kationenaustauscher-Membran). Dadurch erfolgt beim Transport von Lithium (Kationen) zwischen dem Kühlwasser und dem Medium praktisch kein Transport von Boranionen. Es ist nämlich vorteilhaft einen Transport von Anionen, insbesondere borhaltigen Anionen, durch die Elektrodialyseeinheit praktisch zu unterbinden. Dadurch erfolgt die Dosierung bzw. die Reinigung des Li-haltigen Kühlwassers ohne Veränderung der Bor-Konzentration. Bor und Lithium können also jeweils bei Bedarf unabhängig voneinander dosiert werden.

Nach einer Weiterbildung der Erfindung wird bei dem Verfahren wahlweise das Kühlwasser des Wasserkreislaufs durch die erste Seite der Elektrodialyseeinheit geführt und entsprechend das Medium des Konzentratkreislaufs durch die zweite Seite der Elektrodialyseeinheit. Wahlweise ist es auch möglich das Kühlwasser durch die zweite Seite der Elektrodialyseeinheit zu führen und das Medium durch die erste Seite. Entsprechend ist es möglich die Spannung bei dem Verfahren an der Elektrodialyseeinheit umzupolen. Dies hat den Vorteil, daß bei einem Vertauschen der Kreisläufe für Wasser und Medium und gleichzeitigem Umpolen der elektrischen Spannung die Elektroden der Elektrodialyseeinheit von Ablagerungen gereinigt werden.

Es ist weiterhin vorteilhaft dem Kühlwasserkreislauf Kühlwasser zu entnehmen und zu speichern. Vorzugsweise wird dieser Speicher belüftet, so daß insbesondere H₂O₂-Gasgemische abgeführt werden. Insbesondere ist der Konzentratkreislauf und/oder der Kühlwasserkreislauf belüftet, so daß auch hier insbesondere H₂O₂-Gasgemische abgeführt werden.

Nach einer Weiterbildung der Erfindung ist es auch vorteilhaft, daß der Kühlwasserkreislauf über einen H₂O₂-Rekombinator geführt wird.

Nach einer Weiterbildung der Erfindung wird das Verfahren so ausgeführt, daß Kationen aus dem Kühlwasserkreislauf durch eine Kationenaustauschermembran hindurch in den Konzentratkreislauf transportiert werden. Dabei entsteht im Kühlwasserkreislauf auf der Anodenseite der Elektrodialyseeinheit, also in diesem Fall der ersten Seite der Elektrodialyseeinheit Sauerstoff. Es ist deshalb vorteilhaft, daß wenigstens ein Teil des Kühlwassers einer Kühlwasserteilleitung zugeführt wird, wenigstens diesem Teil des Kühlwassers H₂ zugemischt und wenigstens dieser Teil des Kühlwassers über einen H₂O₂-Rekombinator geführt wird. Dies hat den Vorteil, daß Kühlwasser von Sauerstoff befreit und somit Korrosionsschäden an Reaktorbauteilen reduziert werden.

Nach einer Weiterbildung der Erfindung wird das Verfahren so ausgeführt, daß Kationen vom Konzentratkreislauf durch eine Kationenaustauschermembran hindurch in den Kühlwasserkreislauf übertreten. Die Kationen sind vorzugsweise Lithium-Kationen. D.h. daß erfindungsgemäße Verfahren wird nach dieser Weiterbildung praktisch zur Rückspeisung von Lithium in den Kühlwasserkreislauf ausgeführt. Insbesondere wird dazu das Kühlwasser einer Bypassleitung zugeführt, welcher eine H₂O₂-Rekombinator umgeht. Denn bei der eben genannten Weiterbildung des Verfahrens entsteht im Kühlwasserkreislauf, auf der ersten (Anoden-)Seite der Elektrodialyseeinheit durch den Elektrodialysevorgang kein zusätzlicher Sauerstoff, so daß der vorherig genannte H₂O₂-Rekombinator durch die Bypassleitung nun umgangen wird.

Das oben genannte Verfahren kann insbesondere nicht nur zum Dosieren von Lithium verwendet sondern vor allem auch zum Reduzieren von kationischen Verunreinigungen im Kühlmittel angewendet werden.

Die oben genannte Aufgabe wird erfindungsgemäß auch durch ein Verfahren zum Reduzieren von kationischen Verunreinigungen in einem eine Kationenlösung enthaltenden Kühlwasserkreislauf eines Leichtwasserreaktors gelöst. Dabei wird Kühlwasser des Kühlwasserkreislaufs durch eine erste Seite einer Elektrodialyseeinheit und durch eine zweite Seite der Elektrodialyseeinheit wird ein Medium eines Konzentratkreislaufs geführt. In dem Medium wird bei dem erfindungsgemäßen Verfahren eine erhöhte Kationenkonzentration erzeugt, wobei in einem selektiven Ionentauscher im Konzentratkreislauf die kationischen Verunreinigungen aus dem Medium herausgefiltert werden.

Nach einer Weiterbildung der Erfindung findet dieses Verfahren aber auch Anwendung zum Dosieren von Lithium im Kühlmittel. Insbesondere ist es vorteilhaft auch das letztgenannte Verfahren nach einer der oben genannten Weiterbildungen auszuführen.

Die Aufgabe ist weiterhin durch eine Vorrichtung gelöst, welche insbesondere zur Durchführung einer der oben genannten Varianten von Verfahren oder Weiterbildungen einer der Varianten geeignet ist. Eine solche Vorrichtung weist entsprechend dem Stand der Technik eine Elektrodialyseeinheit auf, die auf einer ersten Seite an einem Kühlwasserkreislauf und auf einer anderen, zweiten Seite an einem Konzentratkreislauf angeschlossen ist. Erfindungsgemäß ist bei der Vorrichtung im Konzentratkreislauf ein selektiver Ionentauscher angeschlossen. Insbesondere sind die Seiten der Elektrodialyseeinheit durch einen nur Kationen austauschende Membrananordnung mit mindestens einer Kationenaustauschermembran getrennt. Vorteilhaft ist die Membrananordnung für Lithium-Kationen praktisch durchlässig. Andererseits ist es vorteilhaft, daß die Membrananordnung für Bor-Anionen praktisch undurchlässig ist.

Der Ionentauscher ist insbesondere für kationische Cäsium- und/oder Kobaltnuklide selektiv. Vorteilhaft ist der Ionentauscher dazu als Kationentauscher ausgebildet. Insbesondere enthält er Harze auf Phenol- und/oder Formaldehyd Basis, insbesondere solche die unter dem handelsüblichen Namen Duolite und/oder Amberlite bekannt sind. Diese weisen den Vorteil auf, daß sie besonders auf kationische Cäsium und/oder Kobaltnuklide selektiv sind.

Nach einer Weiterbildung der Erfindung ist an den Wasserkreislauf ein H₂O₂-Rekombinator angeschlossen. Dieser dient zur Rekombination des insbesondere in der Elektrodialyseeinheit entstehenden Sauerstoffs. Vorteilhaft umfaßt der H₂O₂-Rekombinator dazu ein mit einem Anionentauscher befülltes Katalysatorbett. Vorzugsweise umfaßt der Anionentauscher ein palladiumdotiertes Harz. Dazu eignet sich besonders ein palladiumdotiertes Harz, daß unter dem handelsüblichen Namen Lewatit erhältlich ist und beispielsweise in Firmenschriften der Bayer AG näher beschrieben ist.

Nach einer Weiterbildung der Erfindung ist die Elektrodialyseeinheit über eine Ventilweiche an den Wasserkreislauf und den Konzentratkreislauf angeschlossen. Über diese Ventilweiche ist der Wasserkreislauf wahlweise an die erste oder auch zweite Seite der Elektrodialyseeinheit anschließbar. Entsprechend ist der Anschluß des Konzentratkreislaufs dann an die Elektrodialyseeinheit umschaltbar. D.h. entweder ist der Wasserkreislauf an die erste und der Konzentratkreislauf an die zweite Seite der Elektrodialyseeinheit anschließbar, oder aber der Wasserkreislauf ist an die zweite und der Konzentratkreislauf an die erste Seite anschließbar. Die Anschlüsse der Kreisläufe sind also über die Ventilweiche umschaltbar. Entsprechend einer Schaltung der Wasserkreisläufe ist die an der Elektrodialyseeinheit anliegende elektrische Spannung umschaltbar. Dies hat den Vorteil, daß eine Elektrode der Elektrodialyseeinheit wahlweise als Kathode oder auch als Anode genutzt werden kann, so daß die Richtung des Elektrodialysevorgangs umgekehrt werden kann. Damit kann eine Elektrode der Elektrodialyseeinheit von angesammelten Ablagerungen befreit werden, die sich bei einer einmal gewählten Schaltrichtung ansammeln.

Nach einer Weiterbildung der Erfindung ist an dem Konzentratkreislauf ein Speicher mit einer verschließbaren Einspeiseöffnung in den Wasserkreislauf angeschlossen. Vorteilhaft dient der Speicher im Konzentratkreislauf zur Speicherung der Lithium-Hydroxid-Lösung und die Einspeiseöffnung ist bei Bedarf zur Rückspeisung der Lithium-Hydroxid-Lösung zu öffnen, so daß isotopenreines ⁷Li in den Wasserkreislauf rückgespeist wird.

Nach einer Weiterbildung der Erfindung umfaßt das Kühlwassersystem eines Leichtwasserreaktors eine Kühlmittelreinigungsanlage, eine Kühlmittellagerung, eine Kühlmittelverdampferanlage und eine Vorrichtung nach einer der genannten Weiterbildungen der Erfindung. Dabei ist der Wasserkreislauf der erfindungsgemäßen Vorrichtung an die Kühlmittelreinigungsanlage oder die Kühlmittellagerung oder die Kühlmittelverdampferanlage angeschlossen.

Anhand einer Zeichnung werden vorteilhafte Ausführungsformen der Erfindung näher erläutert. Die Figuren zeigen zum Teil in schematischer Darstellung:
- FIG 1: den Austausch von Kationen in der Elektrodialyseeinheit,
- FIG 2: eine Messung zum Herausfiltern von kationischen Verunreinigungen in einem im Konzentratkreislauf angeordneten selektiven Ionentauscher,
- FIG 3: eine Vorrichtung zur Durchführung des erfindungsgemäßen Verfahrens, welche auch den Ablauf des Verfahrens verdeutlicht,
- FIG 4: alternative Möglichkeiten zur Anordnung der Vorrichtung im Kühlwassersystem eines Leichtwasserreaktors.

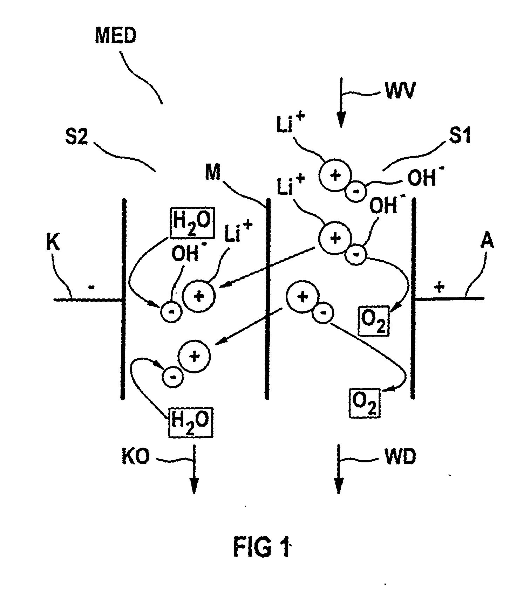

Aus Figur 1 ist eine Elektrodialyseeinheit zur Durchführung des Verfahrens schematisch dargestellt. Die als halbdurchlässige Membran M dargestellte Membrananordnung ist vorteilhaft als Stapel von abwechselnd aus Elektroden und Membranen nur einer Sorte (für den Lithiumentzung: als Kationentauschermembranen ausgebildet) gebildet. Die Elektroden werden abwechselnd als Kathode K und als Anode A gestaltet. In den Zwischenräumen zwischen einer Elektrode K, A und einer Membran M wird entweder Kühlwasser WV oder ein Medium KO eines Konzentratkreislaufs geführt. In Figur 1 ist dies schematisch so dargestellt, daß auf der ersten Seite S1 der Elektrodialyseeinheit MED Kühlwasser WV eines Kühlwasserkreislaufs geführt wird. Dieses verläßt als teilweise deionisiertes Kühlwasser WD (Dilnat) wieder die Elektrodialyseeinheit MED. Auf der zweiten Seite S2 der Elektrodialyseeinheit wird das Medium KO (Konzentrat) in einem Konzentratkreislauf geführt. Beim Anliegen einer Spannung, wie in Figur 1 gezeigt, werden Lithium-Kationen zwischen dem Kühlwasser WV und dem Konzentrat KO ausgetauscht. In dem in Figur 1 dargestellten Fall werden Lithium-Kationen dem Kühlwasser entzogen und gehen in das Konzentrat über. Der Austausch erfolgt durch die Kationentauschermembran M. Im Kühlwasser WV entsteht dabei Sauerstoff O₂. Im Konzentrat K0 erfolgt Einladungsausgleich durch die Zersetzung von Wasser H₂O in Hydroxid-Ionen OH⁻.

Das Reaktorkühlmittel (beispielsweise Wasser WV, WD), dient zum Zweck der richtigen chemischen Konditionierung das Lithium ⁷Li⁺ ganz oder teilweise entzogen werden soll, enthält neben den absichtlich beigefügten Stoffen Bor und Lithium ⁷Li⁺ auch radioaktive Verunreinigungen, die entweder durch die Kernspaltung oder durch Aktivierung infolge der Neutronenstrahlung entstanden sind. Dieses gelangt durch verschiedene, unvermeidbare Mechanismen in das Kühlmittel und können durch die in der Kraftwerksanlage von den Reinigungssysteme nicht vollständig entfernt werden. So werden in Reaktorkühlmittel (Wasser WV, WD) moderner Druckwasserreaktoren typischer Weise Aktivitätskonzentrationen der in diesem Zusammenhang besonders interessierenden, als Kationen auftretenden Nuklide ¹³⁴Cs, ¹³⁷Cs, ⁵⁸Co, ⁶⁰Co, gemessen. Die Größenordnung liegt dabei etwa zwischen 10⁶ und 10⁷ Bq/Mg. Beim Betrieb einer Anlage mit einer Anordnung von Elektroden K, A und Membranen M entsprechend der Figur 1 mit einem solchen Kühlmittel kann beispielsweise Lithium von einer Ausgangskonzentration 1,4 ppm bis auf eine Restkonzentration von etwa 0,22 ppm gesenkt werden, ohne daß gleichzeitig eine Änderung der Borkonzentration auftritt. Dabei stellt sich im Konzentrat KO eine Konzentration von ca. 1250 ppm Li ein.

Auch kationische radioaktive Verunreinigungen, insbesondere die beiden Cäsiumisotope ¹³⁴Cs und ¹³⁷Cs gehen bei dieser Ausführung bis zu über 90 % in das Konzentrat KO, also in den Konzentratkreislauf über. Dies betrifft zu einem gewissen Teil auch das Nuklid ⁶⁰Co.

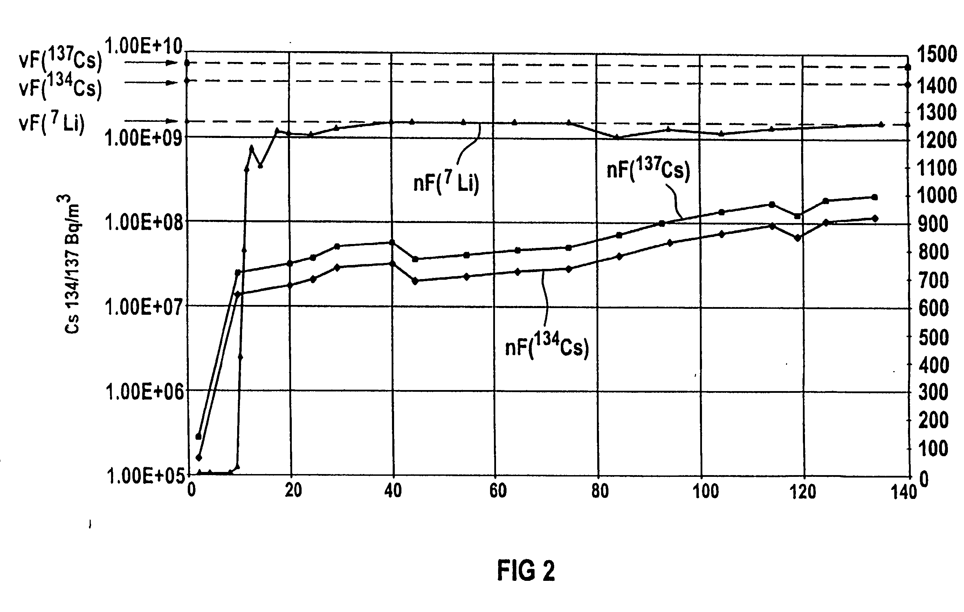

Nach dem genannten Verfahren wird, beispielsweise mit der genannten Vorrichtung, das Konzentrat durch einen Ionentauscher geleitet. Dieser ist mit Kationentauscherharzen, die vorzugsweise eine besondere Selektivität für Cäsium aufweisen, gefüllt. Bei einem, nach dem Verfahren in einer entsprechenden Vorrichtung eingesetzten Kationentauscher ist, wie Figur 2 zu entnehmen, das Aufnahmevermögen für Lithium bereits nach der Durchleitung von etwa 10 Bettvolumen erschöpft und kein wieteres Lithium wird aus dem Konzentrat KO aufgenommen. Dies ist der Kurve VF(⁷Li), welche die Lithiumkonzentration vor dem Filter zeigt, im Vergleich zu der Kurve NF(⁷Li), welche den Verlauf der Lithiumkonzentration nach dem Filter zeigt, in Figur 2 zu entnehmen. Im Gegensatz dazu ist aber das Aufnahmevermögen für Cäsium auch nach der Durchleitung von ca. 140 Bettvolumen noch nicht erschöpft und die genannten Harze weisen immer noch einen Dekontaminationsfaktor von ca. 40 für die Cäsiumisotope ¹³⁴Cs und ¹³⁷Cs auf. Dies ist einerseits dem Vergleich der Kurven VF(¹³⁴Cs) und NF(¹³⁴Cs) sowie dem Vergleich der Kurven VF(¹³⁷Cs) und NF(¹³⁷Cs) in der Figur 2 zu entnehmen.

Bei dem Verfahren ist also eine sehr effektive Separierung des Cäsiums Cs und Kobalts Co vom Lithium Li möglich. Dies wird insbesondere durch die hohe Selektivität der verwendeten Harze, der hohen Lithium und Cäsiumkonzentration, den hohen pH-Werten und der hohen Leitfähigkeit des Mediums KO (Konzentrat) im Konzentratkreislauf bewirkt. Ein solches Harz hat demgegenüber üblicherweise in einen Kühlmittelkreislauf mit Kühlwasser WV, WD geschaltet, sein Aufnahmevermögen für Lithium bereits nach wenigen Bettvolumen erschöpft und weist aber auch für die genannten Radionuklide nur noch einen geringen Dekontaminationsfaktor auf.

Bei dem Verfahren und der Vorrichtung aber verbleibt das für die Wiederverwendung vorgesehene Lithium also in wässriger Lösung, während das Cäsium oder andere Verunreinigungen an das Harz gebunden werden. Das Harz kann nach dessen Erschöpfung in üblicher Weise als Abfall entsorgt werden.

Der Konzentratkreislauf kann vorteilhaft für einen 1,3 GW Druckwasserreaktor nur ein geringes Volumen in der Größenordnung von etwa 1 m³ und einen geringen Durchsatz in der Größenordnung von etwa 1,5 m³/h aufweisen. Bei einem solchen Volumen des Konzentrats KO läßt sich praktisch alles Lithium, das im Laufe eines Betriebszyklus dem Kühlmittel entzogen werden muß, zwischenspeichern.

Dies hat den Vorteil, daß der Ionentauscher für die Herausfiltrierung des Cäsiums, Kobalts oder andere Verunreinigungen entsprechend klein ausgelegt werden kann. Beispielsweise reicht ein Bettvolumen von ca. 80 l. Dies in den Harz zurückgehaltene Aktivität kann dadurch in sehr kompakter und leicht zu handhabender Form entsorgt werden. Würde man dieselbe Aktivitätsmenge auf den in den Kühlmittelreinigungssystemen der Anlagen vorhandenen Mischbettfiltern, die üblicherweise in Verwendung sind, zurückhalten, so würde der dadurch verursachte radioaktive Abfall das mehrfache an Volumen einnehmen und bei der Entsorgung entsprechend höhere Kosten verursachen.

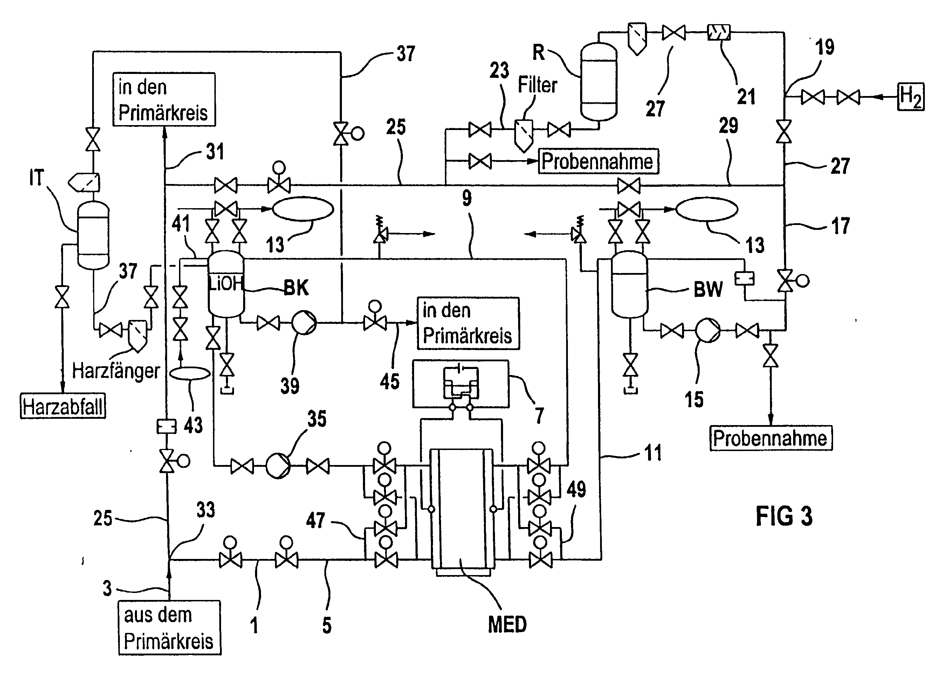

Figur 3 ist eine Vorrichtung zur Durchführung des Verfahrens zu entnehmen. In einer Kühlmittelleitung 1 strömt aus dem Primärkreislauf 3 eines Druckwasserreaktors stammendes Kühlmittel WV mit der dort vorhandenen Konzentration an Bor B und Lithium ⁷Li⁺ somit einer unvermeidbaren Konzentration an verunreinigenden radioaktiven Stoffen (Cs, Co). Das Kühlmittel WV ist üblicherweise auf ca. 50° C abgekühlt und hat einen geringen zur Überwindung der Strömungswiderstände in Rohrleitungen, Armaturen und Apparaten erforderlichen Druck. Mit einer Kühlmittelzuführleitung 5 wird das Kühlmittel WV (Wasser) ganz oder teilweise der Elektrodialyseeinheit, also einer Membranelektrodialyseeinheit MED zugeführt. Die Elektrodialyseeinheit MED wird über eine Stromversorgung 7 mit Gleichstrom versorgt, die erforderliche Spannung ist an der Stromversorgung 7 einstellbar. In der Membranelektrodialyseeinheit MED werden dem Kühlmittel WV die Kationen, insbesondere Lithium und Cäsium, entzogen und in das Konzentrat KO überführt. Das Konzentrat KO wird über die Konzentratablaufleitung 9 aus der Elektrodialyseeinheit MED entfernt. Das stark an Kationen abgereicherte Kühlmittel WD (Dilnat) strömt über die Kühlmittelablaufleitung 11 in einen Kühlmittelauffangbehälter BW. Der Kühlmittelauffangbehälter BW ist an ein im Kraftwerk vorhandenes Abgas oder Abluftsystem 13 angeschlossen, so daß dieser drucklos ist. Mit einer Rückspeisepumpe 15 wird das Kühlmittel DD aus dem Kühlmittelauffangbehälter BW angesaugt. Druckseitig der Rückspeisepumpe 15 befindet sich an der Rohrleitung 17 ein Anschluß 19, mit dem dem Kühlmittel WD gasförmiger Wasserstoff H₂ zugesetzt werden kann.

Das Kühlmittel WD wird dann zunächst über einen statischen Mischer 21, in dem das zugesetzte H₂ vollständig in Lösung gebracht wird, und dann über einen H₂-O₂-Rekombinator R geleitet. In dem Rekombinator R wird der durch den Membranelektrolyseprozeß in das Wasser eingetragene Sauerstoff θ₂ vollständig durch Reaktion mit dem Wasserstoff H₂ entfernt. Ebenso dient auch das Abgassystem 13 an Kühlmittelauffangbehälter BW zur Entlüftung des Kühlmittelkreislaufs, insbesondere von H²O₂-Gas. Hinter dem Katalysator R wird das Kühlmittel WD über eine Kühlmittelrückführleitung 23 wieder in die Kühlmittelleitung 25 eingespeist. Die beschriebenen Teile 19, 21 und R können aber auch nach einer weiteren Ausbildung direkt an die Kühlmittelleitung 25 angeschlossen sein. In der Ausbildung der Erfindung in der Figur 3 sind sie an eine Kühlwasserteilleitung 27 angeschlossen, welche auch durch eine Bypassleitung 29 umgehbar ist. Sowohl die Kühlmittelteilleitung 27 als auch die Bypassleitung 29 münden schließlich wieder in der Kühlmittelleitung 25. Aus der Kühlmittelleitung 25 ist eine Einspeisung des Kühlmittels in dem Primärkreislauf an einer Anschlußstelle 31 möglich, oder aber eine Rückführung in die Kühlmittelzuführleitung 1 an der Stelle 33.

Das Medium KO des Konzentratskreislaufs wird über die Konzentratablaufleitung dem Konzentratbehälter BK zugeführt. Dieser enthält im wesentlichen das Lithium Hydroxid in wässriger Lösung. Der Konzentratbehälter BK ist ebenfalls an das Abgas- oder Abluftsystem 13 angeschlossen, also ebenfalls drucklos. Insbesondere wird dadurch vermieden, daß im Konzentrat KO entstandener Wasserstoff (Lithiumentzug aus dem Kühlwasser) sich mit womöglich auch entstehendem Sauerstoff (Lithiumzudosierung zum Kühlwasser) zu einem explosionsfähigem H₂-O₂-Gas mischt. Das Konzentrat KO ist mit einer Konzentratumwälzpumpe ansaugbar und durch die Konzentratzellen des Membranelektrolyseapparats MED führbar. Schließlich wird es wieder über die Konzentratablaufleitung 9 dem Konzentratbehälter BK zugeführt.

In einem zweiten an den Konzentratbehälter BK angeschlossenen Teilkreislauf 37 kann das Konzentrat mit einer Konzentratpumpe 39 angesaugt und über den Ionentauscher IT geführt werden, der Ionentauscher ist insbesondere als Kationentauscher, der Cäsium selektive Kationentauscherharze enthält ausgebildet. Über die weitere Leitung des Teilkreislaufs 37 wird das Konzentrat schließlich wieder dem Konzentratbehälter BK zugeführt.

Zur Ergänzung aus dem Konzentratkreislauf entnommener Flüssigkeit ist am Konzentratbehälter BK auch ein Anschluß 41 für ein Deionat 43 vorgesehen.

Eine Einspeisung des Konzentrats in den Primärkreislauf, und damit eine Rückspeisung des isotopenreines Lithium in den Primärkreislauf kann über eine Leitung 45, die ebenfalls an den Konzentratbehälter BK angeschlossen ist, erfolgen.

Die Ventilweiche 47, 49 auf der Seite des Konzentratkreislaufs (47) bzw. auf der Seite des Kühlmittelkreislaufs (49), dient zum Wechseln des jeweiligen Mediums in den Seiten der Membranelektrodialyseeinheit. Dabei wird gleichzeitig die Polung der Elektroden der Membranelektrodialyseeinheit gewechselt, so daß auch die Transportrichtung der Ionen in der Einheit umgekehrt wird. Durch diesen Vorgang wird eine Reinigung der Membrane M und der Elektroden K, A von eventuellen Ablagerungen bewirkt.

Wird aber die Änderung der Polung der Elektrodenspannung vorgenommen, ohne die Ventilweichen umzustellen, so bewirkt die Membranelektrodialyseeinheit MED eine Dosierung von Kationen aus dem Konzentrat KO in das Kühlmittel. Dies ist bei dem Verfahren möglich, da die wässrige Lithiumlösung im Konzentratkreislauf im Ionentauscher IT von Verunreinigungen nach dem genannten Verfahren bereinigt werden kann.

Bei der letztgenannten Verwendung des Verfahrens, ist es nicht mehr erforderlich, eine Sauerstoffentfernung aus dem ablaufenden Kühlmittel über einen Kühlmittelteilkreislauf 27 vorzunehmen. Ein Rekombinatior R kann dann über eine Bypassleitung 29 umgangen werden. In diesem Fall ist aber im Konzentratbehälter BK für eine ausreichende Spülung der Behälteratmosphäre gesorgt, da in diesem dem ursprünglich-vorhandenen Wasserstoff nunmehr Sauerstoff zugefügt wird. Die Spülung (H₂O₂-Gasentlüftung) erfolgt über eine Zufuhr-Abfuhrleitung in das Abgassystem 13.

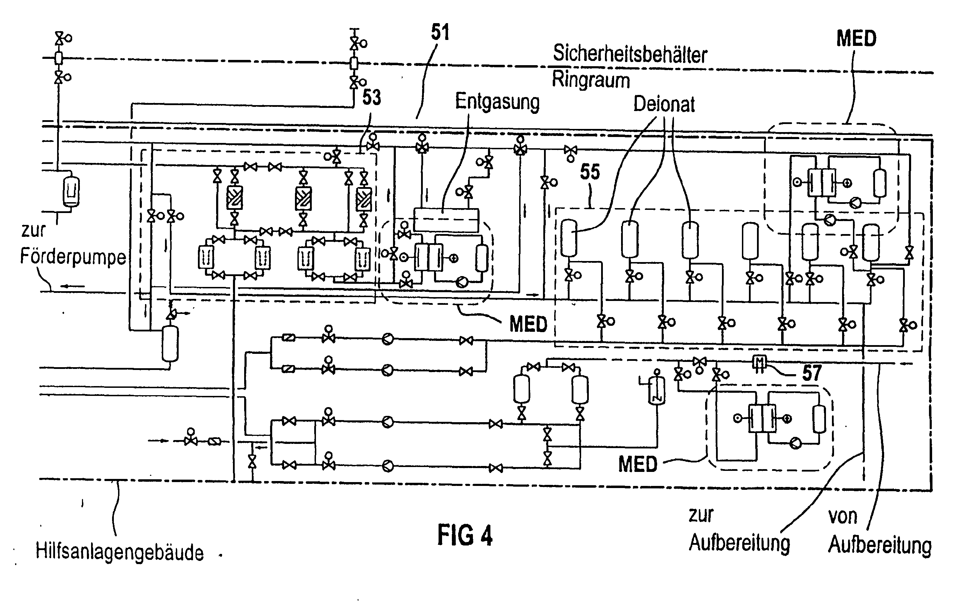

Im Kühlwassersystem 51 eines Leichtwasserreaktors kann die Membranelektrodialyseeinheit in einer der genannten Ausführungsform wie der Figur 4 zu entnehmen alternativ, beispielsweise hinter der Kühlmittelreinigungsanlage 53 des Kühlwassersystems 51 betrieben werden. Sie kann aber auch alternativ in die Anlage zur Lagerung von Primärkühlmittel, also in die Kühlmittellagerung 55 geschaltet sein. Alternativ kann die Membranelektrodialyseeinheit MED aber auch hinter die Verdampferanlage zur Aufkonzentrierung von Borsäure und Erzeugung von Deionat, also hinter einer Kühlmittelverdampferanlage 57 geschaltet sein. Es kann eventuell jedoch auch vorteilhaft sein diese Alternativen miteinander zu kombinieren. Die Kühlmittelreinigungsanlage 53, die Kühlmittellagerung 55 und die Kühlmittelverdampferanlage 57 sind in Figur 4 symbolisch durch eine Ansammlung von im einzelnen nicht genannten Komponenten angedeutet.

Die Schaltung der Membranelektrodialyseeinheit MED hinter die Kühlmittelreinigungsanlage 53 kann so erfolgen, daß ein Teilstrom des vom Volumenregelsystem entnommenen Kühlmittels mit der Membranelektrodialyse behandelt und vom Lithium und dem verunreinigenden Kationen weitgehend befreit direkt mit den Hochdruckförderpumpen wieder in den Primärkreislauf eingespeist wird. Insbesondere erfolgt keine Beeinflussung der Baukonzentrartion im Primärkreislauf durch den Lithium-Cäsium-Entzug. Es ist auch kein Austausch von Kühlmittel mit Hilfe der Kühlmittellagerung und des Systems zur Bor/Deionateinspeisung erforderlich. Insbesondere ist keine H₂-Zuspeisung für die Sauerstoffentfernung erforderlich, da die im entnommenen Kühlmittel vorhandene Wasserstoffkonzentration ausreichend ist. Wenn Kühlmittel mit einer größeren Rate ausgetauscht wird, als es der Kapazität des Membranelektrodialyseeinheit entspricht, so kann dieses nicht mehr behandelt werden.

Deshalb ist gegebenenfalls eine Schaltung der MED in eine Kühlmittellagerung 55 vorteilhaft. In diesem Fall erfolgt die Absenkung der Lithiumkonzentration durch Kühlmittelaustausch. Kühlmittel aus dem Primärkreislauf, das Bor und Lithium enthält wird mit dem Volumenregelsystem entnommen und durch Kühlmittel aus der Kühlmittellagerung 55 mit gleicher Borkonzentration aber ohne Lithium ersetzt. Dies hat den Vorteil, daß in der Membranelektrodialyseeinheit das Verfahren zeitlich und systemtechnisch völlig unabhängig von der Entnahme und Wiedereinspeisung von Kühlmittel mit dem Volumenregelsystem abläuft. Es kann auch das Kühlmittel mit dem Verfahren behandelt werden, daß mit einer großen Durchflußrate dem Primärkreislauf entnommen wurde. Für die Sauerstoffentfernung aus dem behandelten Kühlmittel (Wasser) nach dem Verfahren ist eine Wasserstoffversorgung von außen erforderlich, da durch die Zwischenlagerung eine Ausgasung von Wasserstoff erfolgen kann.

Wird die MED hinter eine Kühlmittelverdampferanlage 57 geschaltet, so hat dies den Vorteil, daß das System zur Durchführung des Verfahrens besonders klein dimensioniert werden kann, da der Konzentratstrom KO im Vergleich zum Kühlmittelmassenstrom RV, WW besonders klein ist. Die Absenkung der Lithiumkonzentration geschieht durch Kühlmittelaustausch: Kühlmittel aus dem Primärkreislauf, das Bor und Lithium enthält wird mit dem Volumenregelsystem entnommen und durch Kühlmittel aus der Kühlmittellagerung mit gleicher Borkonzentration aber ohne Lithium ersetzt. Das Verfahren läuft wiederum zeitlich und systemtechnisch unabhängig von der Entnahme und Wiedereinspeisung von Kühlmittel ab. Insbesondere kann damit auch das Kühlmittel behandelt werden, das mit einer großen Durchflußrate dem Primärkreislauf entnommen wurde. Allerdings ist auch hier eine Sauerstoffentfernung erforderlich. Außerdem muß Borsäurekonzentrat vor der Behandlung in der Membranelektrodialyseeinheit abgekühlt werden.

## Patentansprüche

1. Verfahren zum Reduzieren von kationischen Verunreinigungen in einem eine Kationen-Lösung enthaltenden Kühlwasserkreislauf eines Leichtwasserreaktors, wobei Kühlwasser des Kühlwasserkreislaufs durch eine erste Seite einer Elektrodialyseeinheit und durch eine zweite Seite der Elektrodialyseeinheit ein Medium eines Konzentratkreislaufs geführt wird, und wobei in einem selektiven Ionentauscher im Konzentratkreislauf die kationischen Verunreinigungen aus dem Medium herausgefiltert werden,
**dadurch gekennzeichnet, daß** vor der Zuführung des Mediums in den Ionentauscher eine erhöhte Kationenkonzentration erzeugt wird.

2. Verfahren zum Dosieren von Lithium in einem kationische Verunreinigungen enthaltenden Kühlwasser in einem Kühlwasserkreislauf eines Leichtwasserreaktors, wobei das Kühlwasser durch eine erste Seite einer Elektrodialyseeinheit und durch eine zweite Seite der Elektrodialyseeinheit ein Medium eines Konzentratkreislaufs geführt wird, wobei durch das Anlegen einer elektrischen Spannung der Austausch von Lithium-Kationen in der Elektrodialyseeinheit zwischen dem Kühlwasser im Kühlwasserkreislauf und dem Medium im Konzentratkreislauf gesteuert wird, und wobei kationische Verunreinigungen mittels eines in dem Konzentratkreislauf angeordneten selektiven Ionentauscher aus dem Medium herausgefiltert werden,
**dadurch gekennzeichnet, daß** vor der Zuführung des Mediums in den Ionentauscher eine erhöhte Kationenkonzentration erzeugt wird.

3. Verfahren nach einem der Ansprüche 1 oder 2,
**dadurch gekennzeichnet, daß** das in dem Konzentratkreislauf geführte Medium gespeichert wird und bei Bedarf in den Kühlwasserkreislauf eingespeist wird.

4. Verfahren nach einem der Ansprüche 1, 2 oder 3,
**dadurch gekennzeichnet, daß** das Kühlwasser auf der ersten Seite der Elektrodialyseeinheit und das Medium auf der zweiten Seite der Elektrodialyseeinheit durch eine praktisch nur Kationen austauschende Membrananordnung getrennt werden.

5. Verfahren nach einem der Ansprüche 1 bis 4,
**dadurch gekennzeichnet, daß** ein Transport von Anionen, insbesondere borhaltigen Anionen, vom Kühlwasser in das Medium praktisch unterbunden wird.

6. Verfahren nach einem der Ansprüche 1 bis 5,
**dadurch gekennzeichnet, daß** das Medium im Konzentratkreislauf durch einen Teilkreislauf mit einem Speicher zum Konzentrieren der Kationen und durch einen ebenfalls an den Speicher angeschlossenen weiteren Teilkreislauf mit dem selektiven Ionentauscher zum Ausfiltern der kationischen Verunreinigungen geführt wird.

7. Verfahren nach einem der Ansprüche 1 bis 6,
**dadurch gekennzeichnet, daß** wahlweise das Kühlwasser des Wasserkreislaufs durch die erste Seite der Elektrodialyseeinheit geführt wird und entsprechend das Medizm des Konzentratkreislaufs durch die zweite Seite der Elektrodialyseeinheit, oder wahlweise das Kühlwasser durch die zweite Seite der Elektrodialyseeinheit und das Medium durch die erste Seite.

8. Verfahren nach einem der Ansprüche 1 bis 7,
**dadurch gekennzeichnet, daß** dem Kühlwasserkreislauf Kühlwasser entnommen und gespeichert wird.

9. Verfahren nach einem der Ansprüche 1 bis 8,
**dadurch gekennzeichnet, daß** der Konzentratkreislauf und/oder der Kühlwasserkreislauf belüftet wird, insbesondere H₂-O₂-Gasgemische abgeführt werden.

10. Verfahren nach einem der Ansprüche 1 bis 9,
**dadurch gekennnzeichnet**, daß der Kühlwasserkreislauf über einen H₂-O₂-Rekombinator geführt wird.

11. Verfahren nach einem der Ansprüche 1 bis 10,
**dadurch gekennzeichnet, daß** Kationen aus dem Kühlwasserkreislauf durch eine Kationenaustauschermembran hindurch in den Konzentratkreislauf transportiert werden.

12. Verfahren nach Anspruch 11,
**dadurch gekennzeichnet, daß** wenigstens ein Teil des Kühlwassers einer Kühlwasserteilleitung zugeführt wird, wenigstens diesem Teil des Kühlwassers H₂ zugemischt und wenigstens dieser Teil des Kühlwassers über einen H₂-O₂-Rekombinator geführt wird.

13. Verfahren nach einem der Ansprüche 1 bis 10,
**dadurch gekennzeichnet, daß** Kationen, vorzugsweise Lithium-Kationen, vom Konzentratkreislauf durch eine Kationenaustauschermembran hindurch in den Kühlwasserkreislauf übertreten.

14. Verfahren nach Anspruch 13,
**dadurch gekennzeichnet, daß** das Kühlwasser einer Bypass-Leitung zugeführt wird, welche einen H₂-O₂-Rekombinator umgeht.

15. Anwendung des Verfahrens nach Anspruch 2 oder nach Anspruch 2 und einem der weiteren Ansprüche, zum Reduzieren von kationischen Verunreinigungen im Kühlwasser.

16. Anwendung des Verfahrens nach Anspruch 1 oder nach Anspruch 1 und einem der Ansprüche 3 bis 14, zum Dosieren von Lithium im Kühlwasser.

17. Vorrichtung, insbesondere zur Durchführung eines Verfahrens nach einem der Ansprüche 1 bis 14, mit einer Elektrodialyseeinheit, die auf einer Seite an einen Kühlwasserkreislauf und auf der anderen Seite an einen Konzentratkreislauf angeschlossen ist, **dadurch gekennzeichnet, daß** im Konzentratkreislauf an einer der Elektrodialyseeinheit medienstromseitig nachgeordneten Stelle ein selektiver Ionentauscher angeschlossen ist.

18. Vorrichtung nach Anspruch 17,
**dadurch gekennzeichnet, daß** die Seiten der Elektrodialyseeinheit durch eine nur Kationen austauschende Membrananordnung mit mindestens einer Kationenaustauschermembran getrennt sind.

19. Vorrichtung nach einem der Ansprüche 17 oder 18,
**dadurch gekennzeichnet, daß** der Ionentauscher für kationische Cs- und/oder Co-Nuklide selektiv ist.

20. Vorrichtung nach einem der Ansprüche 17 bis 19,
**dadurch gekennzeichnet, daß** die Membrananordnung für Li-Kationen praktisch durchlässig ist.

21. Vorrichtung nach einem der Ansprüche 17 bis 20,
**dadurch gekennzeichnet, daß** der Ionentauscher als Kationentauscher ausgebildet ist und Harze auf Phenol- und/oder Formaldehyd-Basis, insbesondere Duolite und/oder Amberlite, enthält.

22. Vorrichtung nach einem der Ansprüche 17 bis 21,
**dadurch gekennzeichnet, daß** ein H₂-O₂-Rekombinator an den Wasserkreislauf angeschlossen ist.

23. Vorrichtung nach Anspruch 22,
**dadurch gekennzeichnet, daß** der H₂-O₂-Rekombinator ein mit einem Anionentauscher befülltes Katalysatorbett umfaßt.

24. Vorrichtung nach Anspruch 23,
**dadurch gekennzeichnet, daß** der Anionentauscher ein palladiumdotiertes Harz, insbesondere Lewatit, umfaßt.

25. Vorrichtung nach einem der Ansprüche 17 bis 24,
**dadurch gekennzeichnet, daß** die Elektrodialyseeinheit über eine Ventilweiche an den Wasserkreislauf und den Konzentratkreislauf angeschlossen ist, mit welcher der Wasserkreislauf wahlweise an die erste oder zweite Seite der Elektrodialyseeinheit anschließbar und entsprechend auch der Anschluß des Konzentratkreislaufs an die Elektrodialyseeinheit umschaltbar ist.

26. Vorrichtung nach einem der Ansprüche 17 bis 25,
**dadurch gekennzeichnet, daß** an den Konzentratkreislauf ein Speicher mit einer verschließbaren Einspeiseöffnung in den Wasserkreislauf angeschlossen ist.

27. Kühlwassersystem eines Leichtwasserreaktors, umfassend eine Kühlwasserreinigungsanlage, eine Kühlwasserlagerung, eine Kühlwasserverdampferanlage und eine Vorrichtung nach einem der Ansprüche 17 bis 26, deren Wasserkreislauf an die Kühlwasserreinigungsanlage oder die Kühlwasserlagerung oder die Kühlwasserverdampferanlage angeschlossen ist.

## Claims

1. Method for reducing cationic impurities in a cooling-water loop, containing a cationic solution, of a light water reactor, cooling water of the cooling-water loop being guided through a first side of an electrodialysis unit, and a medium of a concentrate loop being guided through a second side of the electrodialysis unit, and the cationic impurities being filtered out of the medium in a selective ion exchanger in the concentrate loop **characterized in that** an increased cation concentration is generated before the medium is fed into the ion exchanger.

2. Method for dosing lithium in a cooling water, containing cationic impurities, in a cooling-water loop of a light water reactor, the cooling water being guided through a first side of an electrodialysis unit, and a medium of a concentrate loop being guided through a second side of the electrodialysis unit, the exchange of lithium cations in the electrodialysis unit between the cooling water in the cooling-water loop and the medium in the concentrate loop being controlled by applying an electric voltage, and cationic impurities being filtered out of the medium by means of a selective ion exchanger arranged in the concentrate loop **characterized in that** an increased cation concentration is generated before the medium is fed into the ion exchanger.

3. Method according to either of Claims 1 or 2, **characterized in that** the medium guided in the concentrate loop is stored and fed into the cooling-water loop when required.

4. Method according to one of Claims 1, 2 or 3, **characterized in that** the cooling water on the first side of the electrodialysis unit and the medium on the second side of the electrodialysis unit are separated by a membrane arrangement exchanging virtually only cations.

5. Method according to one of Claims 1 to 4, **characterized in that** transport of anions, in particular boron-containing anions, from the cooling water into the medium is virtually suppressed.

6. Method according to one of Claims 1 to 5, **characterized in that** the medium in the concentrate loop is guided through a partial loop with an accumulator for concentrating the cations and through a further partial loop, likewise connected to the accumulator, with the selective ion exchanger for filtering out the cationic impurities.

7. Method according to one of Claims 1 to 6, **characterized in that** the cooling water of the cooling-water loop is optionally guided through the first side of the electrodialysis unit and, correspondingly, the medium of the concentrate loop is guided through the second side of the electrodialysis unit or, optionally, the cooling water is guided through the second side of the electrodialysis unit and the medium is guided through the first side.

8. Method according to one of Claims 1 to 7, **characterized in that** cooling water is extracted from the cooling-water loop and stored.

9. Method according to one of Claims 1 to 8, **characterized in that** the concentrate loop and/or the cooling-water loop are/is vented, in particular H₂-O₂ gas mixtures are withdrawn.

10. Method according to one of Claims 1 to 9, **characterized in that** the cooling-water loop is guided via an H₂-O₂ recombiner.

11. Method according to one of Claims 1 to 10, **characterized in that** cations are transported from the cooling-water loop into the concentrate loop through a cation exchanger membrane.

12. Method according to Claim 11, **characterized in that** at least one portion of the cooling water is fed to a cooling-water sectional line and admixed to at least this part of the cooling water H₂, and at least this portion of the cooling water is guided via an H₂-O₂ recombiner.

13. Method according to one of Claims 1 to 10, **characterized in that** cations, preferably lithium cations, are transferred from the concentrate loop into the cooling-water loop through a cation exchanger membrane.

14. Method according to Claim 13, **characterized in that** the cooling water is fed to a bypass line which bypasses an H₂-O₂ recombiner.

15. Application of the method according to Claim 2 or according to Claim 2 and one of the further claims, in order to reduce cationic impurities in the cooling water.

16. Application of the method according to Claim 1 or according to Claim 1 and one of Claims 3 to 14, in order to dose lithium in the cooling water.

17. Device, in particular for carrying out a method according to one of Claims 1 to 14, having an electrodialysis unit which is connected on one side to a cooling-water loop, and connected on the other side to a concentrate loop, **characterized in that** a selective ion exchanger is connected in the concentrate loop at a location downstream of the electrodialysis unit on the media flow side.

18. Device according to Claim 17, **characterized in that** the sides of the electrodialysis unit are separated by a membrane arrangement, exchanging only cations, having at least one cation exchanger membrane.

19. Device according to one of Claims 17 or 18, **characterized in that** the ion exchanger is selective for cationic Cs nuclides and/or Co nuclides.

20. Device according to one of Claims 17 to 19, **characterized in that** the membrane arrangement is virtually permeable to Li cations.

21. Device according to one of Claims 17 to 20, **characterized in that** the ion exchanger is designed as a cation exchanger, and contains phenol-based and/or formaldehyde-based resins, in particular Duolite and/or Amberlite.

22. Device according to one of Claims 17 to 21, **characterized in that** an H₂-O₂ recombiner is connected to the water loop.

23. Device according to Claim 22, **characterized in that** the H₂-O₂ recombiner comprises a catalyst bed filled with an anion exchanger.

24. Device according to Claim 23, **characterized in that** the anion exchanger comprises a palladium-doped resin, in particular Lewatit.

25. Device according to one of Claims 17 to 24, **characterized in that** the electrodialysis unit is connected to the water loop and the concentrate loop via a switching valve with the aid of which the water loop can be connected optionally to the first or second side of the electrodialysis unit and, correspondingly, it is also possible to switch over the connection of the concentrate loop to the electrodialysis unit.

26. Device according to one of Claims 17 to 25, **characterized in that** an accumulator having a sealable feed-in opening into the water loop is connected to the concentrate loop.

27. Cooling-water system of a light water reactor, comprising a cooling-water cleanup plant, a cooling-water storage means, a cooling-water evaporator plant and a device according to one of Claims 17 to 26, the water loop of which is connected to the cooling-water cleanup plant or the cooling-water storage means or the cooling-water evaporator plant.

## Revendications

1. Procédé de réduction d'impuretés cationiques dans un circuit d'eau de refroidissement contenant une solution de cations d'un réacteur à eau légère, de l'eau de refroidissement du circuit d'eau de refroidissement passant par un premier côté d'un groupe d'électrodialyse et du milieu du circuit du produit concentré passant par un deuxième côté du groupe d'électrodialyse et dans lequel on sépare du milieu par filtration les impuretés cationiques dans un échangeur d'ions sélectif dans le circuit du produit concentré,
**caractérisé en ce que** l'on augmente la concentration de cations avant d'envoyer le milieu dans l'échangeur d'ions.

2. Procédé de dosage du lithium dans de l'eau de refroidissement contenant des impuretés cationiques d'un circuit à eau de refroidissement d'un réacteur à eau légère, l'eau de refroidissement passant par un premier côté d'un groupe d'électrodialyse et un milieu d'un circuit de produit concentré passant par un deuxième côté du groupe d'électrodialyse, dans lequel, en appliquant une tension électrique, on se rend maître de l'échange de cations lithium dans le groupe d'électrodialyse entre l'eau de refroidissement du circuit d'eau de refroidissement et le milieu du circuit de produit concentré et dans lequel on sépare des impuretés cationiques par filtration du milieu au moyen d'un échangeur d'ions sélectif disposé dans le circuit du produit concentré,
**caractérisé en ce que** l'on augmente la concentration de cations avant d'envoyer le milieu dans l'échangeur d'ions.

3. Procédé suivant l'une des revendications 1 ou 2,
**caractérisé en ce que** l'on stocke le milieu passant dans le circuit du produit concentré et, en cas de besoin, on l'envoie dans le circuit d'eau de refroidissement.

4. Procédé suivant l'une des revendications 1, 2 ou 3,
**caractérisé en ce que** l'on sépare l'eau de refroidissement du premier côté du groupe d'électrodialyse et le milieu du deuxième côté du groupe d'électrodialyse par un dispositif à membrane n'échangeant pratiquement que des cations.

5. Procédé suivant l'une des revendications 1 à 4,
**caractérisé en ce que** l'on supprime pratiquement un transport d'anions, notamment d'anions borés, de l'eau de refroidissement au milieu.

6. Procédé suivant l'une des revendications 1 à 5,
**caractérisé en ce que** l'on fait passer dans le circuit du produit concentré par un sous-circuit ayant un réservoir pour concentrer les cations et par un autre sous-circuit raccordé également au réservoir avec l'échangeur d'ions sélectif pour séparer par filtration les impuretés cationiques.

7. Procédé suivant l'une des revendications 1 à 6,
**caractérisé en ce que** l'on fait passer au choix l'eau de refroidissement du circuit d'eau par le premier côté du groupe d'électrodialyse et de manière correspondante le milieu du circuit de produit concentré par le deuxième côté du groupe d'électrodialyse ou au choix l'eau de refroidissement par le deuxième côté du groupe d'électrodialyse et le milieu par le premier côté.

8. Procédé suivant l'une des revendications 1 à 7,
**caractérisé en ce que** l'on prélève de l'eau de refroidissement du circuit d'eau de refroidissement et on la stocke.

9. Procédé suivant l'une des revendications 1 à 8,
**caractérisé en ce que** l'on aère le circuit du produit concentré et/ou le circuit d'eau de refroidissement en évacuant notamment un mélange gazeux H₂-O₂.

10. Procédé suivant l'une des revendications 1 à 9,
**caractérisé en ce que** l'on peut passer le circuit d'eau de refroidissement dans un recombinateur d'H₂-O₂.

11. Procédé suivant l'une des revendications 1 à 10,
**caractérisé en ce que** l'on transporte des cations du circuit d'eau de refroidissement au circuit du produit concentré en passant à travers une membrane échangeuse de cations.

12. Procédé suivant la revendication 11,
**caractérisé en ce que** l'on envoie au moins une partie de l'eau de refroidissement à un sous-conduit d'eau de refroidissement, on ajoute de l'H₂ au moins à cette partie de l'eau de refroidissement et on fait passer au moins cette partie d'eau de refroidissement par un recombinateur d'H₂-O₂.

13. Procédé suivant l'une des revendications 1 à 10,
**caractérisé en ce que** des cations, de préférence des cations lithium, passent du circuit de produit concentré au circuit d'eau de refroidissement en traversant une membrane d'échange de cations.

14. Procédé suivant la revendication 13,
**caractérisé en ce que** l'on envoie l'eau de refroidissement à un conduit de dérivation qui contourne un recombinateur d'H₂-O₂.

15. Utilisation du procédé suivant la revendication 2 ou suivant la revendication 2 et l'une des autres revendications pour réduire des impuretés cationiques dans l'eau de refroidissement.

16. Utilisation du procédé suivant la revendication 1 ou suivant la revendication 1 et suivant l'une des revendications 3 à 14 pour doser du lithium dans l'eau de refroidissement.

17. Dispositif, notamment pour effectuer un procédé suivant l'une des revendications 1 à 14, comprenant un groupe d'électrodialyse qui est raccordé d'un côté à un circuit d'eau de refroidissement et de l'autre côté à un circuit de produit concentré, **caractérisé en ce que**, dans le circuit de produit concentré, il est raccordé un échangeur d'ions sélectif en un point en aval du côté du passage du milieu du groupe d'électrodialyse.

18. Dispositif suivant la revendication 17,
**caractérisé en ce que** les côtés du groupe d'électrodialyse sont séparés par un agencement à membrane n'échangeant que des cations et ayant au moins une membrane d'échange de cations.

19. Dispositif suivant l'une des revendications 17 ou 18,
**caractérisé en ce que** l'échangeur d'ions est sélectif pour des nucléides cationiques Cs et/ou Co.

20. Procédé suivant l'une des revendications 17 à 19,
**caractérisé en ce que** le dispositif à membrane est pratiquement perméable aux cations Li.

21. Procédé suivant l'une des revendications 17 à 20,
**caractérisé en ce que** l'échangeur d'ions est sous la forme d'un échangeur de cations et contient des résines à base de phénol et/ou de formaldéhyde, notamment des résines Duolite et/ou Amberlite.

22. Procédé suivant l'une des revendications 17 à 21,
**caractérisé en ce qu'**un recombinateur d'H₂-O₂ est raccordé au circuit d'eau.

23. Dispositif suivant la revendication 22,
**caractérisé en ce que** le recombinateur d'H₂-O₂ comprend un lit de catalyseur garni d'échangeur d'anions.

24. Dispositif suivant la revendication 23,
**caractérisé en ce que** l'échangeur d'anions comprend une résine dopée au palladium, notamment de la lewatite.

25. Dispositif suivant l'une des revendications 17 à 24,
**caractérisé en ce que** le groupe d'électrodialyse est raccordé par une vanne à plusieurs voies au circuit d'eau et au circuit de produit concentré, vanne par laquelle le circuit d'eau peut être raccordé au choix au premier ou au deuxième côté du groupe d'électrodialyse et de manière correspondante aussi le raccordement du circuit du produit concentré au groupe d'électrodialyse peut être commuté.

26. Dispositif suivant l'une des revendications 17 à 25,
**caractérisé en ce qu'**au circuit du produit concentré est raccordé un réservoir ayant une ouverture d'entrée dans le circuit d'eau, ouverture qui peut être fermée.

27. Système d'eau de refroidissement d'un réacteur à eau légère comprenant une installation d'épuration d'eau de refroidissement, un stockage d'eau de refroidissement, une installation à évaporateur d'eau de refroidissement et un dispositif suivant l'une des revendications 17 à 26, dont le circuit d'eau est raccordé à l'installation d'épuration d'eau de refroidissement ou au stockage d'eau de refroidissement ou à l'installation à évaporateur d'eau de refroidissement.
